# EUROPÄISCHE PATENTSCHRIFT

(11) **EP 4 202 500 B1**
(45) Veröffentlichungstag und Bekanntmachung des Hinweises auf die Patenterteilung: **23.09.2026**
(21) Anmeldenummer: 22212543.7
(22) Anmeldetag: 09.12.2022
(51) Int. Cl.: G01T 1/169

(54) **BEWERTUNG VON RADIONUKLIDVERHÄLTNISSEN**
EVALUATION OF RADIONUCLIDE RATIOS
ÉVALUATION DE RAPPORTS RADIONUCLÉIDES

(30) Priorität: 22.12.2021 DE 102021134369
(43) Veröffentlichungstag der Anmeldung: 28.06.2023
(73) Patentinhaber: RWE Nuclear GmbH, 45141 Essen (DE)
(72) Erfinder: Bolz, Jürgen Friedrich, 45141 Essen (DE); Börner, Prashantha Jonathan Benjamin, 45141 Essen (DE)
(74) Vertreter: Schwenderling, Jens

(56) Entgegenhaltungen:
- WO-A1-2015/181268
- SCHMIDT ET AL: "FAQ Rückbau von Kernkraftwerken - Fragen und Antworten", INTERNET CITATION, 21 July 2015 (2015-07-21), pages 1 - 21, XP009541651, Retrieved from the Internet <URL:https://www.oeko.de/oekodoc/2331/2015-498-de.pdf>

## Beschreibung

Gegenstand der Anmeldung ist ein Verfahren zur radiologischen Prüfung von Reststoffen, die aus einer kerntechnischen Anlage entfernt werden sollen. Derartige Reststoffe fallen in großen Mengen beim Rückbau von kerntechnischen Anlagen an. Ein Rückbau einer kerntechnischen Anlage ist ein sehr aufwändiger Prozess, bei dem der Trennung von kontaminiertem und nicht kontaminiertem Material eine zentrale Bedeutung zukommt. Unter einer radioaktiven Kontamination wird im Rahmen dieses Dokuments eine Verunreinigung grundsätzlich nicht radioaktiver Stoffe, insbesondere von Oberflächen, verstanden.

Verfahren zum Untersuchen von Material auf radioaktive Kontaminationen sind bekannt, beispielsweise aus der EP 3 149 472 A1 oder aus der WO 2015/181268 A1. Unkontaminiertes Material, beziehungsweise Material, dessen radiologische Aktivität unter einem vorgegebenen hierfür relevanten Freigabewert liegt, kann einem konventionellen Recycling unterzogen oder deponiert werden, während kontaminierte und nicht freigabefähige Reststoffe gesondert als radioaktiver Abfall weiterbehandelt und/oder entsorgt werden müssen. Die daraus resultierenden schwach und mittelradioaktiven Reststoffe werden konditioniert (beispielweise verbrannt, verpresst o. ä.) und in geeigneten Behältern für eine Endlagerung vorbereitet. Für hochradioaktive, wärmeentwickelnde Abfälle, wie beispielsweise die Kernbrennstäbe eines Kernkraftwerks, gibt es Behälter, beispielsweise die unter dem Begriff "Castor-Behälter" bekannten Behälter, die so gestaltet sind, dass eine Emission radioaktiver Strahlung reduziert wird, Wärme abgegeben werden kann und ein Austreten der enthaltenen Radioaktivität verhindert wird. Bis zum Verbringen der Abfallbehälter in ein Endlager werden diese in Zwischenlagern gesichert gelagert.

Jegliche Stoffe, die dauerhaft in einer kerntechnischen Anlage verbaut beziehungsweise in Benutzung waren und aus dieser entfernt werden, müssen in Bezug auf eine mögliche radioaktive Kontamination vermessen werden. Bei einem Rückbau einer kerntechnischen Anlage entsteht daher eine große Menge an Reststoffen, die entsprechend vermessen werden muss.

Dazu werden bisher die Reststoffe in bestimmten Mengen einer Nuklidanalyse unterzogen, in der die Konzentration aller relevanten Nuklide bestimmt wird. Hierzu werden von den jeweiligen Materialchargen Proben genommen und gammaspektrometrisch untersucht. Unter einer gammaspektroskopischen Untersuchung wird die Messung des Spektrums der Gammastrahlung der entsprechenden Probe verstanden. Allerdings erzeugen nicht alle Radionuklide, deren Freigabewerte einzuhalten sind, bei ihrem Zerfall ein Photon, bzw. eines mit einer messbaren Gamma-Linie. Das generelle Vorliegen solcher Nuklide ist daher, sofern deren Existenz nicht ausgeschlossen werden kann, für die Freigabe zu bewerten. Da der Nachweis dieser schwer messbaren Radionuklide sehr aufwändig ist, werden diese so genannten Sondernuklidanalysen in der Regel in externen, entsprechend qualifizierten, Radiochemie-Laboren durchgeführt.

Neben den Absolutwerten der Aktivitäten der Radionuklide in Becquerel ist zur Festlegung der Freigabefähigkeit eines Reststoffes ebenfalls die Nuklidzusammensetzung, auch Nuklidvektor genannt, von Relevanz. Der Nuklidvektor wird in der Regel zum Freimessen, also beim Überprüfen der Freigabefähigkeit von Reststoffen, verwendet. Dies geschieht größtenteils in sogenannten Gesamt-Gamma-Messanlagen, auch Freimessanlagen genannt. Dort werden die freizugebenden Reststoffe nicht nuklidspezifisch untersucht, sondern es werden den mit den Detektoren gemessenen Impulsen entsprechend des Nuklidvektors Nuklide zugeordnet und Aktivitätswerte berechnet, welche mit den einzuhaltenden Freigabewerten verglichen werden. Da hierbei eine Entscheidung bzgl. der Freigabefähigkeit getroffen wird, werden diese Messungen Entscheidungsmessungen genannt. Die Festlegung der Nuklidvektoren für die Entscheidungsmessungen ist somit für die Freigabe von Reststoffen von höchster Relevanz. Da jeweils das Vorliegen von schwer nachweisbaren Radionukliden in freigaberelevanten Konzentrationen bewertet werden muss, sind hierfür in der Regel sehr viele aufwändige und kostspielige Sondernuklidanalysen notwendig.

Die Messwerte werden mit vorgebbaren Grenzwerten verglichen, die mindestens den gesetzlichen Vorgaben entsprechen. Auf Grundlage der erhaltenen Messwerte wird entschieden, wie die untersuchte Menge an Reststoffen weitergehend behandelt wird, insbesondere, ob die Menge an Reststoff als unkontaminiert oder kontaminiert zu entsorgen ist. Dieser Prozess ist mit großem zeitlichem und kostentechnischem Aufwand verbunden, zumal ein Großteil der Einzelmessungen zum Ergebnis hat, dass die genannten Grenzwerte unterschritten werden und die betreffenden Reststoffe somit nicht gesondert behandelt werden müssen.

Die vorliegende Erfindung hat zur Aufgabe, die aus dem Stand der Technik bekannten Nachteile zumindest teilweise zu überwinden. Die Aufgabe wird gelöst mit den Merkmalen des unabhängigen Anspruchs. Die abhängigen Ansprüche sind auf vorteilhafte Weiterbildungen gerichtet.

Das erfindungsgemäße Verfahren zur Untersuchung von Reststoffen, die aus einer kerntechnischen Anlage entfernt werden, umfasst:
▪ Bereitstellen einer Menge des Reststoffs;
▪ Durchführen einer nuklidspezifischen gammaspektroskopischen Messung an zumindest einer Teilmenge der Menge des Reststoffs zum Erhalt eines Gammaspektrums;
▪ Erzeugen eines lokalen Nuklidvektors aus dem Gammaspektrum;
▪ Bereitstellen eines globalen Nuklidvektors, der für eine radiologische Kontamination der gesamten kerntechnischen Anlage zum Zeitpunkt der Durchführung der gammaspektroskopischen Messung repräsentativ ist;
▪ Abgleich des lokalen Nuklidvektors mit dem globalen Nuklidvektor;
▪ Neubestimmung des globalen Nuklidvektors, wenn der Abgleich zu einer Abweichung zwischen dem globalen Nuklidvektor und dem lokalen Nuklidvektor führt, die über ein vorgebbares Maß hinaus geht;
▪ Durchführen einer Messung der radiologischen Aktivität an der bereitgestellten Menge an Reststoff zum Erhalt einer reststoffspezifischen radiologischen Aktivität, wenn der Abgleich zwischen dem globalen Nuklidvektor und dem lokalen Nuklidvektor eine Abweichung ergeben hat, die kleiner als das vorgebbare Maß ist, und Zuleitung des Reststoffes zu einer aktivitätsspezifischen Aufnahme in Abhängigkeit von der probenspezifischen radiologischen Aktivität;
wobei zur Bestimmung des globalen Nuklidvektors auf radionuklidspezifische Anlagenmesswerte der radiologischen Aktivität zurückgegriffen wird, die für die radioaktive Kontamination eines relevanten Teils der gesamten kerntechnischen Anlage repräsentativ sind, wobei die Anlagenmesswerte radionuklidspezifische Aktivitäten umfassen, die auf radionuklidspezifischen Messungen eines Verdampferkonzentrats zurückgehen, welches in einem Verdampfer anfällt, in dem die bei der Entwässerung der kerntechnischen Anlage entstehenden Abwässer aufkonzentriert werden, und wobei mehrere Messungen an verschiedenen Verdampferkonzentraten durchgeführt werden, die damit Messwerte liefern, die über verschiedene Zeiträume kumulierte Aktivitäten als Ergebnis darstellen.

Unter einer kerntechnischen Anlage wird insbesondere eine Anlage zur Verarbeitung, Verwertung und/oder Lagerung von Kernbrennstoff verstanden. Bevorzugt umfasst der Begriff der kerntechnischen Anlage kommerzielle Kernkraftwerke zur Stromerzeugung, Forschungsreaktoren, Reaktoren zur Nukliderzeugung, beispielsweise zum Einsatz in medizinischen Therapie- oder Diagnoseverfahren, Einrichtungen zur nuklearen Versorgung, insbesondere Anreicherungsanlagen und Brennelementfabriken, und Anlagen zur Entsorgung, insbesondere Wiederaufbereitungsanlagen und Zwischenlager. Unter dem relevanten Teil der kerntechnischen Anlage werden insbesondere die Bereiche verstanden, die keine radiologisch relevante Aktivierung aufweisen. Eine radiologische Aktivierung ist dann nicht relevant, wenn bei einer Verkürzung des entsprechenden Nuklidvektors das oder die entsprechenden Nuklide vernachlässigt werden können oder die absoluten spezifischen Aktivitäten der Nuklide deutlich unter den relevanten Freigabewerten liegen. Der relevante Teil umfasst insbesondere nicht den Bioschild mit den darin befindlichen Anlagenteilen wie dem Reaktordruckbehälter.

Der Begriff Reststoff beschreibt in diesem Zusammenhang alle Stoffe, die aus der kerntechnischen Anlage im Betrieb oder während eines Rückbaus entfernt werden müssen.

Unter dem Bereitstellen eines Reststoffs wird insbesondere das Zusammenstellen einer Menge an Reststoff verstanden, von der ausgegangen wird, dass ein ähnliches Ergebnis einer Entscheidungsmessung zu erwarten ist. Insbesondere sind dies Reststoffe, die in einem räumlich homogenen Kontext, beispielsweise einem bestimmten Raum, verbaut waren und/oder die eine einheitliche Betriebshistorie aufweisen, also insbesondere im Hinblick auf eine mögliche Aktivierung beispielsweise durch Kontakt mit einem primären Kühlmedium.

Unter dem Begriff Nuklidvektor wird eine Menge an radionuklidspezifischen Konzentrationen der radiologischen Aktivität verstanden. Bevorzugt sind die radionuklidspezifischen Konzentrationen als Verhältnisse der gesamten radiologischen Aktivität angegeben, so dass beispielsweise ein Wert von 0,2 für ein bestimmtes Radionuklid angibt, dass dieses Radionuklid mit 20% zur gesamten radiologischen Aktivität beiträgt.

Unter der Bereitstellung des globalen Nuklidvektors wird insbesondere eine Bestimmung des globalen Nuklidvektors oder ein Bereitstellen eines zu einem früheren Zeitpunkt bestimmten globalen Nuklidvektors verstanden. Unter einer Neubestimmung des globalen Nuklidvektors wird die neue Bestimmung des globalen Nuklidvektors und/oder die Änderung des bestehenden globalen Nuklidvektors in Teilbereichen, beispielsweise nur bezogen auf ein einziges Radionuklid oder eine Gruppe von Radionukliden, beispielsweise durch eine Sondernuklidanalyse, verstanden. Es kann auch ein Satz von mehreren globalen Radionuklidvektoren vorliegen, so dass die Neubestimmung auch einen Wechsel zwischen zweien dieser globalen Radionuklidvektoren umfasst. Weiterhin wird unter der Neubestimmung des globalen Nuklidvektors auch eine Ausschöpfungsänderung eines bestehenden globalen Nuklidvektors verstanden, die unten beschrieben wird.

Unter dem lokalen Nuklidvektor wird der aus dem Gammaspektrum, welches an der Menge an Reststoff gemessen wurde, erzeugte Nuklidvektor verstanden. Er ist repräsentativ für die Menge an Reststoff.

Unter dem Abgleich des lokalen Nuklidvektors mit dem globalen Nuklidvektor wird insbesondere verstanden, dass die radionuklidspezifischen Konzentrationen für identische Isotope im lokalen Nuklidvektor und im globalen Nuklidvektor für jedes Nuklid verglichen werden. Liegt die spezifische Aktivität im lokalen Radionuklidvektor für bestimmte Nuklide (Isotope) oberhalb des entsprechenden Radionuklidanteils im globalen Nuklidvektor, insbesondere um ein Maß, welches höher als die Genauigkeit bei der Bestimmung des lokalen Nuklidvektors ist, insbesondere, wenn der Wert des lokalen Nuklidvektors für mindestens eines der folgenden Radionuklide: Cäsium-137 und Americium-241, die auch Pilotisotope genannte werden, größer ist als der entsprechende Wert im globalen Nuklidvektor, so weicht der lokale Nuklidvektor um mehr als das vorgebbare Maß vom globalen Nuklidvektor ab.

Die Pilotisotope zeichnen sich dadurch aus, dass ihr Anteil aufgrund ihrer schlechteren Messbarkeit bei den Entscheidungsmessungen für die Bewertung der Freigabefähigkeit von besonderer Relevanz sind. Liegt also im lokalen Nuklidvektor für mindestens ein Pilotisotop eine Konzentration vor, deren prozentuale Abweichung um mehr als 2% oberhalb der entsprechenden Konzentration im globalen Nuklidvektor liegt, so ist das tolerierbare Maß an Abweichung überschritten.

Liegt nun ein Fall vor, in dem für mindestens ein Pilotisotop eine Abweichung zwischen der Nuklidkonzentration im lokalen Nuklidvektor im Vergleich zum globalen Nuklidvektor vorliegt, die über einem vorgebbaren Maß, beispielsweise 2% liegt, so kann im Wesentlichen auf zwei Arten reagiert werden.

Einerseits ist es möglich, bei der durchzuführenden Entscheidungsmessung den globalen Nuklidvektor zu verwenden, jedoch die prozentuale Ausschöpfung des Freigabewertes des globalen Nuklidvektors bei der Entscheidungsmessung entsprechend herab zu setzen, sodass eine Einhaltung der zugrundeliegenden Freigabewerte gewährleistet werden kann. Diese Vorgehensweise ist insbesondere dann bevorzugt, wenn nicht von einem unterschiedlichen radiologischen Bereich ausgegangen werden muss. Dies wäre beispielsweise der Fall, wenn in relevantem Ausmaß zusätzliche, im globalen Nuklidvektor nicht enthaltene, Radionuklide auftreten.

Ersatzweise kann auch eine gammaspektrometrische Überprüfung an relevantem freizugebenden Material, d.h. solchem mit höheren Freigabewert-Ausschöpfungen nach durchgeführter Entscheidungsmessung, durch Probennahme oder In-Situ-Gammaspektrometrie erfolgen. Dies wird im Allgemeinen als Kontrollmessung verstanden. Durchgeführt werden diese üblicherweise bei höheren (beispielsweise ab 80%) beziehungsweise den höchsten Freigabewert-Ausschöpfungen bezogen auf eine konkrete, freizugebenden Materialcharge.

Andererseits kann die Definition oder Überprüfung eines eigenständigen radiologischen Bereiches durch Sondernuklidanalysen notwendig sein. Dies ist insbesondere dann der Fall, wenn der lokale Nuklidvektor aus anderen, zusätzlichen Radionukliden besteht und die Abweichung bezüglich der Pilotnuklide ein tolerierbares Maß überschreitet, oder insbesondere bei Vorliegen von Aktivierung oder Aktivierungsverdacht im freizugebenden Material oder, wenn aufgrund der Beschaffenheit des Bauteils, Systems oder Materials generell unterstellt werden muss, dass chemische und/oder physikalische Prozesse einen Einfluss auf die Nuklidzusammensetzung haben.

Grundgedanke der vorliegenden Erfindung ist es, ausgehend von der Betriebshistorie und einer repräsentativen Probenbasis anstelle zahlreicher, aufwändiger Sondernuklidanalysen ein vereinfachtes Verfahren zur Bestimmung eines anlagenweiten Nuklidvektors, inklusive der Bewertung der schwer nachweisbaren Radionuklide zu Freigabezwecken bereitzustellen. Darauf basierend soll die Entscheidung über eine Weiterbehandlung beziehungsweise Freigabe jeder Menge an Reststoff auf einfache Weise erfolgen können.

Ein wichtiger Aspekt der Erfindung ist die Identifizierung mindestens einer Messstelle, an der anlagenweit, also für die gesamte kerntechnische Anlage gültig, die Konzentration von vorgebbaren Radionukliden bestimmt werden kann. Die anfallenden Radionuklide, insbesondere in Kernkraftwerken, Forschungsreaktoren und Reaktoren zur Nukliderzeugung, umfassen zum einen Spaltprodukte, die durch den radioaktiven Zerfall des Kernbrennstoffs entstehen. Zum anderen besteht die relevante Radioaktivität in der Regel auch aus Aktivierungsprodukten, die in Folge des Zerfalls von Spaltprodukten entstehen. Die entstandenen Radionuklide können leicht flüchtig oder auch in einer Matrix fixiert sein, so dass beispielsweise zuerst Korrosionsprodukte entstehen müssen, um die Radionuklide freizusetzen.

In allen kerntechnischen Anlagen entstehen aus den vorliegenden Radionukliden entsprechend der Zerfallsketten darüber hinaus weitere Zerfallsprodukte. Übliche Spaltprodukte umfassen Isotope von Iod, Cäsium, Strontium, Xenon und Barium. Der Verlauf des Zerfalls der Spaltprodukte, der Zerfallsprodukte und auch der Radionuklide im Kernbrennstoff kann durch Halbwertszeiten charakterisiert werden, denen ein exponentieller Zerfall oder eine Überlagerung eines exponentiellen Wachstums und eines exponentiellen Zerfalls zugrunde liegt. Insbesondere nach Beendigung des Betriebes eines Kernkraftwerks bauen sich viele Spaltprodukte aufgrund kurzer Halbwertszeiten relativ schnell ab. Wird dann nach einer gewissen Zeit, beispielsweise zehn Jahre nach Beendigung des Betriebes der kerntechnischen Anlage, mit dem Rückbau begonnen, hat sich eine relative Konzentration der originären Spaltprodukte bereits wesentlich verschoben. Beim Zerfall der Spaltprodukte entstehen Zerfallsprodukte, die ihrerseits in weitere Zerfallsprodukte zerfallen.

Liegt also eine kerntechnische Anlage bereits mehrere Jahre still und ist kein Kernbrennstoff mit Radionukliden, von denen radioaktive Strahlung ausgeht, mehr vorhanden, so verliert die Konzentration von Zerfallsprodukten erster Generation an Bedeutung. Stattdessen entstehen vermehrt sogenannte Tochternuklide als Zerfallsnuklide. Bei dem vorgeschlagenen Verfahren kann die relative Konzentration vieler vorgebbarer Nuklide anlagenweit bestimmt werden, sodass über große Zeiträume Trends bei der Konzentration und ihrer Entwicklung feststellbar und entsprechende Prognosen treffbar sind.

Das hier vorgestellte Verfahren kann nicht nur nach Stilllegung einer kerntechnischen Anlage Anwendung finden, vielmehr sind alle Verfahrensschritte auch im laufenden Betrieb einer kerntechnischen Anlage bei der Freigabe von Reststoffen anwendbar, sodass sich das hier beschriebene Verfahren für jegliche Einstufung von Reststoffen, die aus einer kerntechnischen Anlage entfernt werden, eignet.

Ausgangspunkt der vorliegenden Erfindung ist die Erkenntnis, dass sämtliche für eine Einordnung in kontaminierte und unkontaminierte Reststoffe relevante Radioaktivität in einer kerntechnischen Anlage aus nukleartechnischen Vorgängen in der kerntechnischen Anlage selbst stammt, bei einem Kernkraftwerk beispielsweise aus der kontrollierten Kernspaltung des Kernbrennstoffs unter Bildung der Spaltprodukte. Hierbei kann es zu einer direkten Kontamination kommen, in dem Spaltprodukte oder Zerfallsprodukte an, auf oder in einen Reststoff gelangen, beispielsweise für Komponenten und Bauteile aus einem Primärkühlkreislauf eines Kraftwerks, oder durch eine indirekte Kontamination, d.h. durch ungewollte Kontamination durch Handhabung kontaminierter Teile oder einer indirekten Verbreitung durch Aerosole. Gleiches gilt für Radionuklide, die durch Neutronenaktivierung entstanden sind. Dies betrifft auch Umstände, bei denen die Kontamination durch einen Korrosionsvorgang freigesetzt wird.

Um die Höhe der Kontamination zu bestimmen, werden auch weiterhin Einzelmessungen an jeder Restmenge vorgenommen. Das Verfahren ermöglicht jedoch eine signifikante Reduktion der Anzahl an notwendigen Sondernuklidanalysen, die aufwändig und kostspielig sind. Dies wird erreicht, indem eine relative Konzentration der verschiedenen Sondernuklide bestimmt werden kann. Somit müssen nur noch einzelne Sondernuklidanalysen durchgeführt werden, anhand derer Ergebnisse Rückschlüsse auf das Vorkommen und die Konzentration weiterer Sondernuklide gezogen werden können. Diese fließen ggf. in die Neubestimmung des globalen Nuklidvektors ein.

Das Konzept der Anlagenmesswerte beruht auf anlagenweit repräsentativen Messwerten, die zumindest Daten des Verdampferkonzentrats umfassen. Sämtliche Abwässer der kerntechnischen Anlage werden zumindest teilweise verdampft und damit im Verdampferkonzentrat aufkonzentriert. Das Verdampferkonzentrat umfasst somit sämtliche möglichen nicht flüchtigen durch die Abwässer aufgenommene Kontaminationen. Überraschenderweise hat sich herausgestellt, dass die radioaktive Kontamination des Verdampferkonzentrats ein Maß für die radioaktive Kontamination der Elemente der kerntechnischen Anlage, insbesondere, wenn diese nicht im Leistungsbetrieb betrieben wird, darstellt. So konnte insbesondere ausgeschlossen werden, dass Radionuklide, deren Konzentration im Verdampferkonzentrat unter einer vorgebbaren Schwelle liegt, nennenswerte radioaktive Kontaminationen in den Reststoffen verursachen.

Von daher erlaubt das hier vorgestellte Verfahren eine Reduktion des messtechnisch notwendigen Aufwands bei unverändertem Sicherheitsstandard unter Einhaltung der jeweils geltenden hoheitlichen Regelungen.

Bevorzugt werden bei der Bestimmung des globalen Nuklidvektors radioaktive Zerfallsvorgänge basierend auf in der Vergangenheit liegenden Messwerten berücksichtigt. Dies erlaubt es, basierend auf vorliegenden Anlagenmesswerten, die beispielsweise auf einer radionuklidspezifischen Messung eines Verdampferkonzentrats zu einem bestimmten in der Vergangenheit liegenden Zeitpunkt beruhen, den globalen Nuklidvektor zu einem späteren beziehungsweise aktuellen Zeitpunkt zu bestimmen. Bevorzugt erfolgt dies, in dem bei der Bestimmung des globalen Nuklidvektors auf Zerfallsketten zurückgegriffen wird. Dies bedeutet, dass der globale Nuklidvektor zu einem ersten Zeitpunkt bekannt ist, beispielsweise gemessen wird. Hierdurch sind die Verhältnisse der Radionuklide zu diesem Zeitpunkt bekannt. Aufgrund der bekannten radioaktiven Zerfallsprozesse dieser Radionuklide unter Berücksichtigung der entsprechenden Halbwertszeiten wird dann das Verhältnis der Radionuklide und damit der globale Nuklidvektor zu einem späteren zweiten Zeitpunkt bestimmt. Insbesondere wird hierbei auf Zerfallsketten von Spaltprodukten und/oder Aktivierungsprodukten zurückgegriffen.

Bevorzugt wird dabei bei der Berücksichtigung von Zerfallsketten auf die Betriebshistorie der kerntechnischen Anlage zurückgegriffen. Dies bedeutet insbesondere, dass die Laufzeit der kerntechnischen Anlage bis zum aktuellen Zeitpunkt und/oder Stillstandszeiten der kerntechnischen Anlage bis zum aktuellen Zeitpunkt berücksichtigt wird. So werden insbesondere bei Kernkraftwerken Zeiten des Leistungsbetriebes und Zeiten des Nichtleistungsbetriebes oder Stillstand berücksichtigt. Im Leistungsbetrieb werden dabei Spaltprodukte und Zerfallsprodukte erzeugt, während im Nichtleistungsbetrieb lediglich Zerfallsprodukte erzeugt werden. Aufbau und Abbau von Spaltprodukten und/oder Zerfallsprodukten werden dabei durch entsprechende Exponentialfunktionen in Kenntnis der entsprechenden Halbwertszeiten berücksichtigt.

Bevorzugt wird der globale Nuklidvektor bestimmt, indem Verhältnisanteile der Integrale der Zerfallsgleichung der jeweiligen Radionuklide entsprechend deren jeweiligem Anteil an Messwerten einer Probe, insbesondere des Verdampferkonzentrats, gebildet werden. Bei den entsprechenden Integralen handelt es sich um zeitliche Integrale über die Exponentialfunktionen (Zerfallsgleichungen), die den Aufbau und den Abbau des entsprechenden Radionuklids mit dessen individueller Halbwertszeit beschreiben.

Bevorzugt wird für Reststoffe, die aus vorgebbaren Bereichen der kerntechnischen Anlage stammen, insbesondere aus Aktivierungsbereichen und Bereichen mit abweichender Betriebshistorie, bei der Bestimmung des globalen Nuklidvektors auf nuklidspezifische Messwerte gemessen an Reststoffen aus den vorgebbaren Bereichen zurückgegriffen. Hierbei wird berücksichtigt, dass insbesondere im Aktivierungsbereich der kerntechnischen Anlage, also beispielsweise im Reaktordruckbehälter und/oder primären Kühlkreislauf eines Kernkraftwerks grundsätzlich andere radiologische Verhältnisse bestehen als in anderen Bereichen. Dies gilt auch für Bereiche mit abweichender Betriebshistorie, also beispielsweise, wenn bestimmte Bauteile einer kerntechnischen Anlage nachgerüstet werden oder ähnliches. Für Reststoffe aus diesen Bereichen erfolgt bevorzugt eine Ergänzung des globalen Nuklidvektors durch Messwerte, die sich auf Material beziehen, welches aus diesen Bereichen stammt., insbesondere basierend auf einer entsprechenden Sondernuklidanalyse, bevorzugt durchgeführt außerhalb der kerntechnischen Anlage, insbesondere in einem entsprechenden radiochemischen Labor. Bevorzugt werden hier aus diesen Bereichen Oberflächenproben genommen, insbesondere umfassend Proben der entsprechenden Anstriche oder Lackierungen in diesen Bereichen und diese der Sondernuklidanalyse unterzogen.

Bevorzugt wird die Menge des Reststoffs einer ersten Aufnahme für gesondert zu lagerndes Gut zugeführt, wenn die reststoffspezifische radiologische Aktivität einen vorgebbaren Grenzwert überschreitet. Bevorzugt wird die Menge des Reststoffs einer zweiten Aufnahme für unkontaminiertes Gut zugeführt, wenn die reststoffspezifische radiologische Aktivität einen vorgebbaren Grenzwert unterschreitet. Insbesondere handelt es sich bei der reststoffspezifischen radiologischen Aktivität um eine massenspezifische oder flächenspezifische Aktivität. Die gemessene reststoffspezifische radiologische Aktivität wird dabei mit Grenzwerten verglichen, die bevorzugt hoheitlich vorgegeben werden.

Unter dem Begriff Aufnahme wird insbesondere ein Behältnis verstanden, in dem die Reststoffe einem Recycling, einer Deponierung etc. zugeführt werden. Bevorzugt können die Reststoffe aus der Aufnahme vorher in andere Behälter umgefüllt werden, beispielsweise in sogenannte Castor-Behälter oder ähnliches.

Bevorzugt kann eine weitere Einteilung der Reststoffe, deren radioaktive Strahlung mindestens einen Grenzwert überschreiten, durch Einführung weiterer Grenzwerte erfolgen, beispielsweise in schwach-, mittel- und hochradioaktiv kontaminierte Reststoffe, die jeweils anderen Aufnahmen zugeführt und mit oder aus diesen anderen Lagerungsarten zugeführt werden, erfolgen.

Bevorzugt umfasst die Neubestimmung des globalen Nuklidvektors die nuklidspezifische Messung der radiologischen Aktivität zumindest für einen Teil der Radionuklide des Nuklidvektors. Bevorzugt wird also für mindestens ein Radionuklid eine Sondernuklidanalyse durchgeführt. Insbesondere erfolgt hier eine nuklidspezifische Messung der radiologischen Aktivität für die Radionuklide, für die eine Abweichung festgestellt wurde oder für die eine solche basierend auf der Abweichung zwischen lokalem und globalem Nuklidvektor zu erwarten ist.

Gemäß einer vorteilhaften Ausgestaltung erfolgt eine so genannte Verkürzung des globalen und/oder des lokalen Nuklidvektors. Hierbei werden die einzelnen Elemente des jeweiligen Nuklidvektors gewichtet betrachtet. Die Gewichtung liefert einen gewichteten Anteil wᵢ eines Radionuklids i. Der gewichtete Anteil wird berechnet als ein Quotient, bei dem im Zähler ein Quotient aus dem Anteil vᵢ des Radionuklids i am Nuklidvektor und dem relevanten Freigabewert Rᵢ des Radionuklids i und im Nenner die Summe über alle Radionuklide i der Quotienten aus vᵢ und Rᵢ steht: ${w}_{i} = \left({v}_{i}/{R}_{i}\right) / \left(Σ {v}_{i}/{R}_{i}\right)$

Anschließend werden die gewichteten Anteile wᵢ ausgehend vom größten wᵢ zum kleinsten wᵢ addiert, bis 90% (oder 0,9) überschritten wird. Die restlichen Nuklidanteile wᵢ können bei der weiteren Betrachtung vernachlässigt werden. Dann werden für die im so erhaltenen verkürzten Nuklidvektor auftretenden Radionuklide die Nuklidanteile des repräsentativen originalen Nuklidvektors herangezogen und auf 100% normiert. Der zugehörige Freigabewert FGW_{NV} für den Nuklidvektor wird wie folgt berechnet: ${FGW}_{NV} = 1 / \left(Σ {v}_{i}/{R}_{i}\right)$

Für die Messung mit einer Gesamtgammamessanlage (FMA) ist die Messbarkeit der einzelnen Nuklide zu berücksichtigen. Diese wird mit einem Messbarkeitsfaktor (lnc) in der Betrachtung mit einbezogen. Der Messfaktor gibt Auskunft über die relative Empfindlichkeit eines nicht nuklidspezifisch messenden Messgerätes für ein Nuklid i in einem Messgut bezogen auf die Empfindlichkeit des Messgerätes für Cobalt-60 im selben Messgut.

Aus den Messbarkeitsfaktoren (lnc-Faktoren) der einzelnen Nuklide und deren Anteil am Nuklidvektor lässt sich der lnc-Faktor für einen Nuklidvektor NV wie folgt errechnen als die Summe über die Produkte aus den Messbarkeitsfaktor lncᵢ für das Nuklid i und dem relativen Anteil vᵢ des Nuklids i am Nuklidvektor NV: ${lnc}_{NV} = Σ {lnc}_{i} ⋅ {v}_{i}$

Hierbei wird über alle Nuklide im Nuklidvektor summiert.

Je kleiner der Messbarkeitsfaktor lnc_{NV} für den Nuklidvektor NV ist, desto größer wird die für eine bestimmte FMA-Messung ermittelte Gesamtaktivität. Somit kann das Produkt aus Messbarkeitsfaktor lnc_{NV} des Nuklidvektors NV und nuklidvektorbezogenem Freigabewert (Summenaktivität aller Nuklide des Vektors, die genau den Summenformelwert 1 ergibt) als Kriterium dafür verwendet werden, ob ein Nuklidvektor abdeckend gegenüber einem anderen ist.

Ein Nuklidvektor x ist dann abdeckend gegenüber einem Nuklidvektor y, wenn gilt: ${lnc}_{NV , x} ⋅ {FGW}_{NV . x} < {lnc}_{NV , y} ⋅ {FGW}_{NV . y}$ mit lnc_{NV,x} als Messfaktor für den Nuklidvektor x (dimensionslos), FGW_{Nv,x} als Nuklidvektorbezogener Freigabewert für den Nuklidvektor x (beispielsweise angegeben als massen- oder flächenbezogene Aktivität in Bq/g bzw. Bq/cm²), mit lnc_{NV,y} als Messbarkeitsfaktor für den Nuklidvektor y (dimensionslos) und FGW_{NV,y} als Nuklidvektorbezogenem Freigabewert für den Nuklidvektor y (insbesondere als flächen- oder massenbezogene Aktivität angegeben).

Gemäß vorgenannter Berechnungsvorschrift können die an der FMA hinterlegten globalen Nuklidvektoren mit den die freizugebende Menge an Reststoff beschreibenden lokalen Nuklidvektoren hinsichtlich Abdeckung/Konservativität verglichen und ein geeigneter Freigabe-Nuklidvektor aus den globalen Nuklidvektoren für die freizugebende Menge an Reststoff festgelegt werden.

Es muss gelten ("Abdeckungsbedingung" für den zur Freigabe genutzten globalen Nuklidvektor): ${lnc}_{VN , glob} ⋅ {FGW}_{NV , glob} < {lnc}_{NV , lok} ⋅ {FGW}_{NV , lok}$ mit lnc_{NV,glob} als Messbarkeitsfaktor des globalen Nuklidvektors, lnc_{NV,lok} als Messbarkeitsfaktor des lokalen Nuklidvektors, FGW_{NV,glob} als Freigabewert des globalen Nuklidvektors und FGW_{NV,lok} als Freigabewert des lokalen Nuklidvektors.

Vorteilhaft wird das hier beschriebene Verfahren im Freigabeverfahren von Reststoffen im Rahmen eines Rückbaus einer kerntechnischen Anlage angewendet.

Die Erfindung sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Insbesondere ist darauf hinzuweisen, dass die Figuren und insbesondere die dargestellten Größenverhältnisse nur schematisch sind. Gleiche Bezugszeichen bezeichnen gleiche Gegenstände, so dass ggf. Erläuterungen aus anderen Figuren ergänzend herangezogen werden können.

Es zeigen:
- Fig. 1:: schematisch eine Detailansicht einer Verdampfereinheit; und
- Fig. 2:: einen zeitlichen Ablauf mehrerer Messungen.

Sofern nicht explizit auf eine bestimmte Figur verwiesen wird, gelten die folgenden Ausführungen für alle Figuren.

Ein großer Teil der nicht in einer Matrix gebundenen radioaktiven Kontamination in einer kerntechnischen Anlage liegt in flüssiger Form vor oder kann beispielsweise durch Reinigungsarbeiten in eine Flüssigkeit gelangen. Kontaminierte Flüssigkeit liegt zum Beispiel als Abwasser vor oder fällt im Rahmen von Rückbau- oder Reinigungsarbeiten an. Um das Volumen an flüssigem kontaminiertem Abfall zu reduzieren, wird durch Verdampfung konzentriert. Die Verdampfung liefert ein Verdampferkonzentrat. Der Nuklidvektor dieses Verdampferkonzentrats wird ermittelt. Es hat sich herausgestellt, dass dieser Nuklidvektor ganz überwiegend den Nuklidvektor der gesamten kerntechnischen Anlage beschreibt.

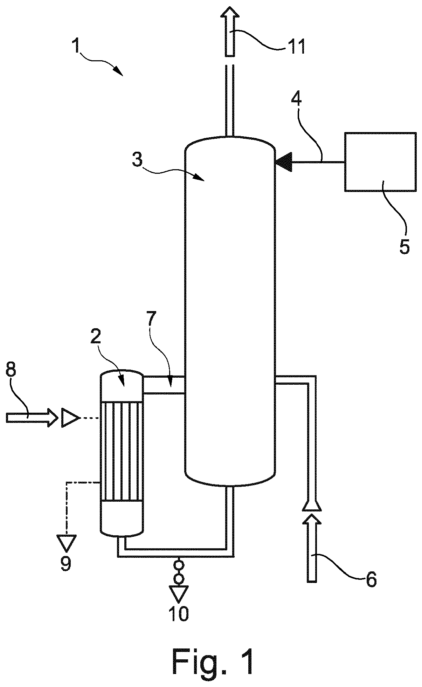

Eine entsprechende Verdampfung wird unten unter Bezugnahme auf Fig. 1 näher beschrieben. Der Verdampfung werden insbesondere sämtliche Abwässer zugeführt, die in der kerntechnischen Anlage anfallen, insbesondere bei deren Betrieb und/oder deren Rückbau, insbesondere umfassend Sumpfwasser aus den Räumen der kerntechnischen Anlage, Abwasser aus Laboren in der kerntechnischen Anlage, Abwasser aus einem Dekontaminationsraum der kerntechnischen Anlage, Wasser aus dem Brennelement-Becken, Dekantat aus den Konzentratbehältern des Verdampfers, Abwasser aus einer Wäscherei, in der Bekleidung des in der kerntechnischen Anlage beschäftigen Personals gereinigt wird, aus Duschräumen und/oder aus Waschräumen der kerntechnischen Anlage, Restwässer, zum Beispiel Destillat, aus der Aufbereitung von Kühlmittel, Regenerat und Spülwasser vom entsprechenden Filtern, Spülwasser von Staubfiltern, Putzwasser und/oder Betriebswasser aus dem Betrieb von Werkzeugen, die im Rückbau eingesetzt werden.

Somit sammeln sich sämtliche mögliche Verschmutzungen und damit die gesamte mögliche Oberflächenkontamination in dem Wasser, welches der Verdampfung unterworfen wird. Das bei der teilweisen Verdampfung und daraus folgender Konzentration entstehende Verdampferkonzentrat stellt somit eine zuverlässige Quelle dar, aus der Informationen über die mögliche Kontamination in der kerntechnischen Anlage gewonnen werden können.

Die Anlagenmesswerte beruhen also, wie dargelegt, auf den Messungen am Verdampferkonzentrat. Hierbei ist es für die Bestimmung der Zusammensetzung und Verhältnisse der Radionuklide zunächst ausreichend, auf eine einzige Messung des Verdampferkonzentrats zurückzugreifen.

Da üblicherweise eine Verdampfung nur dann erfolgt, wenn sich genügend Wasser angesammelt hat, können Messungen am Verdampferkonzentrat regelmäßig nur diskontinuierlich erfolgen. Erfindungsgemäß werden mehrere Messungen an verschiedenen Verdampferkonzentraten durchgeführt, die damit Messwerte liefern, die über verschiedene Zeiträume (zwischen zwei Verdampfungsvorgängen) kumulierte Aktivitäten als Ergebnis darstellen. Ab der zweiten Messung werden diese Messungen als Nachmessungen bezeichnet. Bevorzugt fließen die Ergebnisse verschiedener radionuklidspezifischer Messungen in die Anlagenmesswerte ein, die zu verschiedenen Zeitpunkten und damit an verschiedenen Verdampferkonzentraten durchgeführt werden. Die entsprechenden Messwerte können dabei gewichtet werden, beispielsweise unter Berücksichtigung des Alters der Messwerte. Weiterhin wird bevorzugt der Anlagenmesswert und insbesondere verschiedene Messungen am Verdampferkonzentrat für radionuklidspezifische Prognosen der zukünftig zu erwartenden nuklidspezifischen Aktivitäten und damit eine Prognose der Anlagenmesswerte erfolgen, die bevorzugt als Anlagenmesswerte verwendet werden können.

Fig. 1 zeigt schematisch eine Detailansicht einer Verdampfereinheit 1, die zur Konzentration von Abwässern einer kerntechnischen Anlage eingesetzt wird. Die Abwässer der kerntechnischen Anlage werden in einem Sammelbehälter 5 gesammelt. Liegt eine genügend große Menge an Abwässern vor, wird eine Verdampfung vorgenommen. Je nach Art der Abwässer kann vor der Verdampfung eine chemische Behandlung erfolgen. Die Verdampfereinheit 1 umfasst einen Verdampfer 2 und eine Abstreiferkolonne 3. Wasser 4 aus dem Sammelbehälter 5 wird in die Abstreiferkolonne 3 geleitet. Dort sickert sie unter Zuführung von Rohwasser 6 nach unten und gelangt in einen Verdampferkreislauf 7. Die Zuführung von Rohwasser 6 ist insbesondere vorgesehen, um eine im Verdampferkreislauf 7 befindliche Menge an Wasser konstant zu halten. Im Verdampfer 2 wird Wasser aus dem Verdampferkreislauf 7 unter Zuführung von Hilfsdampf 8 verdampft. Kondensat 9 wird entzogen. Gebildeter Dampf 11 wird abgeführt. Der Verdampfereinheit 1 wird während des Prozesses kontinuierlich ein Verdampferkonzentrat 10 entzogen.

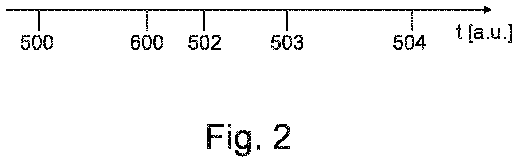

Fig. 2 zeigt einen zeitlichen Ablauf von Messungen an einem Zeitstrahl mit der Zeit t, aufgetragen in willkürlichen Einheiten. Zunächst erfolgt eine Verdampferkonzentrat-Messung 500, aus der Anlagenmesswerte bestimmt werden. Zu einem späteren Zeitpunkt erfolgt eine Nachmessung 502, die auch eine Verdampferkonzentrat-Messung darstellt, ebenso weitere Nachmessungen 503, 504, die jeweils zu späteren Zeitpunkten erfolgen. Die zeitlichen Abstände zwischen aufeinanderfolgenden Messungen 500, 502, 503, 504 müssen nicht konstant sein, sondern variieren bevorzugt, beispielsweise abhängig vom Anfall von Wasser 4, welches aus einem Sammelbehälter 5 einer Verdampfereinheit 1 zugeführt wird und aus dem ein Verdampferkonzentrat 10 gebildet wird. Weiterhin können Oberflächenmessungen 600 in bestimmten Bereichen, beispielsweise dem Aktivierungsbereich erfolgen.

Beschrieben wird ein Verfahren zur Prüfung von Reststoffen, die aus einer kerntechnischen Anlage entfernt werden, wobei ein globaler Nuklidvektor basierend auf einer radiologischen Analyse eines Verdampferkonzentrats 10 gebildet wird, der spezifisch für relevante Teile der kerntechnischen Anlage ist. Bei der Freigabe von Reststoffen wird ein Gammaspektrum der freizugebenden Menge an Reststoff erstellt, aus dem entsprechenden Gammaspektrum ein lokaler Nuklidvektor erzeugt und dieser mit dem globalen Nuklidvektor verglichen. Bei Übereinstimmung, oder messtechnischer Konservativität des globalen Nuklidvektors, kann dann eine Freigabemessung erfolgen. Liegt eine Abweichung vor, wird der globale Nuklidvektor angepasst, gegebenenfalls durch Sondernuklidanalysen oder durch Anpassung der Freigabewert-Ausschöpfung. Durch dieses Vorgehen kann die Zahl der notwendigen Sondernuklidanalysen deutlich reduziert werden, wodurch eine effizientere Freigabe von Reststoffen möglich ist. Dies ist insbesondere beim Rückbau der kerntechnischen Anlage vorteilhaft.

### Bezugszeichen

- 1: Verdampfereinheit
- 2: Verdampfer
- 3: Abstreiferkolonne
- 4: Wasser
- 5: Sammelbehälter
- 6: Rohwasser
- 7: Verdampferkreislauf
- 8: Hilfsdampf
- 9: Kondensat
- 10: Verdampferkonzentrat
- 11: Dampf
- 500: Verdampferkonzentrat-Messung
- 501: Messwerte aus einer Messung eines Verdampferkonzentrats
- 502: Nachmessung
- 503: Nachmessung
- 504: Nachmessung
- 600: Oberflächen-Messung

- FGW_{NV}: Freigabewert für den Nuklidvektor NV
- lncᵢ: Messbarkeitsfaktor für das Nuklid i
- lnc_{NV}: Messbarkeitsfaktor für den Nuklidvektor NV
- Rᵢ: relevanter Freigabewert des Radionuklids i
- vᵢ: Anteil des Radionuklids i am Nuklidvektor
- wᵢ: gewichteter Anteil eines Radionuklids i.

## Patentansprüche

1. Verfahren zur Untersuchung von Reststoffen, die aus einer kerntechnischen Anlage entfernt werden, umfassend:
▪ Bereitstellen einer Menge des Reststoffs;
▪ Durchführen einer nuklidspezifischen gammaspektroskopischen Messung an zumindest einer Teilmenge der Menge des Reststoffs zum Erhalt eines Gammaspektrums;
▪ Erzeugen eines lokalen Nuklidvektors aus dem Gammaspektrum;
▪ Bereitstellen eines globalen Nuklidvektors, der für eine radiologische Kontamination der gesamten kerntechnischen Anlage zum Zeitpunkt der Durchführung der gammaspektroskopischen Messung repräsentativ ist;
▪ Abgleich des lokalen Nuklidvektors mit dem globalen Nuklidvektor;
▪ Neubestimmung des globalen Nuklidvektors, wenn der Abgleich zu einer Abweichung zwischen dem globalen Nuklidvektor und dem lokalen Nuklidvektor führt, die über ein vorgebbares Maß hinaus geht;
▪ Durchführen einer Messung der radiologischen Aktivität an der bereitgestellten Menge an Reststoff zum Erhalt einer reststoffspezifischen radiologischen Aktivität, wenn der Abgleich zwischen dem globalen Nuklidvektor und dem lokalen Nuklidvektor eine Abweichung ergeben hat, die kleiner als das vorgebbare Maß ist, und Zuleitung des Reststoffes zu einer aktivitätsspezifischen Aufnahme in Abhängigkeit von der probenspezifischen radiologischen Aktivität;
wobei zur Bestimmung des globalen Nuklidvektors auf radionuklidspezifische Anlagenmesswerte der radiologischen Aktivität zurückgegriffen wird, die für die radioaktive Kontamination eines relevanten Teils der gesamten kerntechnischen Anlage repräsentativ sind, **dadurch gekennzeichnet, dass** die Anlagenmesswerte radionuklidspezifische Aktivitäten umfassen, die auf radionuklidspezifischen Messungen eines Verdampferkonzentrats (10) zurückgehen, welches in einem Verdampfer (2) anfällt, in dem die bei der Entwässerung der kerntechnischen Anlage entstehenden Abwässer aufkonzentriert werden, und wobei mehrere Messungen an verschiedenen Verdampferkonzentraten durchgeführt werden, die damit Messwerte liefern, die über verschiedene Zeiträume kumulierte Aktivitäten als Ergebnis darstellen.

2. Verfahren nach Anspruch 1, bei dem bei der Bestimmung des globalen Nuklidvektors radioaktive Zerfallsvorgänge basierend auf in der Vergangenheit liegenden Messwerten berücksichtigt werden.

3. Verfahren nach einem der vorhergehenden Ansprüche, bei dem bei der Bestimmung des globalen Nuklidvektors auf Zerfallsketten zurückgegriffen wird.

4. Verfahren nach Anspruch 3, bei dem bei der Bestimmung des Nuklidvektors auf Zerfallsketten von Spaltprodukten und/oder Aktivierungsprodukten zurückgegriffen wird.

5. Verfahren nach Anspruch 3 oder 4, bei dem bei der Berücksichtigung von Zerfallsketten auf die Betriebshistorie der kerntechnischen Anlage zurückgegriffen wird.

6. Verfahren nach einem der vorhergehenden Ansprüche, bei dem der globale Nuklidvektor bestimmt wird, in dem Verhältnisanteile der Integrale der Zerfallsgleichung der jeweiligen Radionuklide entsprechend deren jeweiligem Anteil an Messwerten einer Probe, insbesondere des Verdampferkonzentrats, gebildet werden.

7. Verfahren nach einem der vorhergehenden Ansprüche, bei dem für Reststoffe, die aus vorgebbaren Bereichen der kerntechnischen Anlage stammen, insbesondere aus Aktivierungsbereichen und Bereichen mit abweichender Betriebshistorie, bei der Bestimmung des globalen Nuklidvektors auf nuklidspezifische Messwerte gemessen an Reststoffen aus den vorgebbaren Bereichen zurückgegriffen wird.

8. Verfahren nach einem der vorhergehenden Ansprüche, bei dem die Menge des Reststoffs einer ersten Aufnahme für gesondert zu lagerndes Gut zugeführt wird, wenn die reststoffspezifische radiologische Aktivität einen vorgebbaren Grenzwert überschreitet.

9. Verfahren nach einem der vorhergehenden Ansprüche, bei dem die Menge des Reststoffs einer zweiten Aufnahme für unkontaminiertes Gut zugeführt wird, wenn die reststoffspezifische radiologische Aktivität einen vorgebbaren Grenzwertes unterschreitet.

10. Verfahren nach einem der vorhergehenden Ansprüche, bei dem die Neubestimmung des globalen Nuklidvektors die nuklidspezifische Messung der radiologischen Aktivität zumindest für einen Teil der Radionuklide des Nuklidvektors umfasst.

## Claims

1. Method for investigating residues removed from a nuclear power plant, comprising:
▪ providing a quantity of the residual material;
▪ performing a nuclide-specific gamma-spectroscopic measurement on at least a partial amount of the quantity of residual material to obtain a gamma spectrum;
▪ creating a local nuclide vector from the gamma spectrum;
▪ providing a global nuclide vector representative of radiological contamination of the entire nuclear power plant at the time of performing the gamma-spectroscopic measurement;
▪ comparing the local nuclide vector with the global nuclide vector;
▪ re-determining the global nuclide vector if the comparison results in a deviation between the global nuclide vector and the local nuclide vector that goes beyond a predeterminable degree;
▪ performing a measurement of the radiological activity on the quantity of residual material provided to obtain a residue-specific radiological activity if the comparison between the global nuclide vector and the local nuclide vector has shown a deviation less than the predeterminable degree, and feeding the residual material to an activity-specific receptacle in dependence on the sample-specific radiological activity;
wherein radionuclide-specific measured power-plant values for radiological activity representative of the radioactive contamination of a relevant part of the entire nuclear power plant are used to determine the global nuclide vector, **characterized in that** the measured power-plant values include radionuclide-specific activities resulting from radionuclide-specific measurements of an evaporator concentrate (10) produced in an evaporator (2) in which the effluent generated during the dewatering of the nuclear power plant is concentrated, and wherein multiple measurements are performed on different evaporator concentrates, thereby providing measured values that represent cumulative activities over different time periods as a result.

2. Method according to Claim 1, in which radioactive decay processes based on measured values in the past are taken into consideration in the determination of the global nuclide vector.

3. Method according to one of the preceding claims, in which decay chains are used in the determination of the global nuclide vector.

4. Method according to Claim 3, in which the decay chains of fission products and/or activation products are used in the determination of the nuclide vector.

5. Method according to Claim 3 or 4, in which, when considering decay chains, the operating history of the nuclear power plant is used.

6. Method according to one of the preceding claims, in which the global nuclide vector is determined by forming ratios of the integrals of the decay equation of the respective radionuclides according to their respective proportion of measured values of a sample, in particular of the evaporator concentrate.

7. Method according to one of the preceding claims, in which, for residues which originate from predeterminable areas of the nuclear power plant, in particular from activation areas and areas with a different operating history, nuclide-specific measured values measured on residues from the predeterminable areas are used in the determination of the global nuclide vector.

8. Method according to one of the preceding claims, in which the quantity of residual material is fed to a first receptacle for material to be stored separately if the residue-specific radiological activity exceeds a predeterminable limit value.

9. Method according to one of the preceding claims, in which the quantity of residual material is fed to a second receptacle for uncontaminated material if the residue-specific radiological activity falls below a predeterminable limit value.

10. Method according to one of the preceding claims, in which the re-determination of the global nuclide vector comprises the nuclide-specific measurement of the radiological activity at least for some of the radionuclides of the nuclide vector.

## Revendications

1. Procédé d'analyse de résidus qui sont retirés d'une installation nucléaire, comprenant :
▪ mise à disposition d'une quantité donnée de résidus ;
▪ réalisation d'une mesure spectroscopique gamma spécifique à un nucléide sur au moins un sous-ensemble de la quantité de résidus afin d'obtenir un spectre gamma ;
▪ génération d'un vecteur de nucléide local à partir du spectre gamma ;
▪ mise à disposition d'un vecteur de nucléide global qui est représentatif de la contamination radiologique de l'ensemble de l'installation nucléaire au moment de la réalisation de la mesure spectroscopique gamma ;
▪ comparaison du vecteur de nucléide local au vecteur de nucléide global ;
▪ nouvelle détermination du vecteur de nucléide global lorsque la comparaison donne lieu à un écart entre le vecteur de nucléide global et le vecteur de nucléide local qui dépasse un niveau pouvant être prédéfini ;
▪ réalisation d'une mesure de l'activité radiologique sur la quantité de résidus mis à disposition afin d'obtenir une activité radiologique spécifique aux résidus lorsque la comparaison entre le vecteur de nucléide global et le vecteur de nucléide local a révélé un écart qui est inférieur au niveau pouvant être prédéfini, et amenée des résidus vers un dispositif de réception spécifique à l'activité en fonction de l'activité radiologique spécifique à l'échantillon ;
la détermination du vecteur de nucléide global s'effectuant en se référant à des valeurs mesurées d'installation de l'activité radiologique spécifique aux radionucléides, qui sont représentatives de la contamination radioactive d'une partie pertinente de l'ensemble de l'installation nucléaire, **caractérisé en ce que** les valeurs mesurées d'installation comprennent des activités spécifiques aux radionucléides, qui sont issues de mesures spécifiques aux radionucléides d'un concentré d'évaporateur (10), lequel est produit dans un évaporateur (2) dans lequel sont concentrées les eaux usées qui résultent lors du drainage de l'installation nucléaire, et plusieurs mesures étant effectuées sur différents concentrés d'évaporateur, lesquelles fournissent ainsi des valeurs mesurées qui représentent, comme résultat, des activités cumulées sur différentes périodes.

2. Procédé selon la revendication 1, avec lequel les processus de désintégration radioactive sur la base des valeurs mesurées qui se trouvent dans le passé sont pris en compte lors de la détermination du vecteur de nucléide global.

3. Procédé selon l'une des revendications précédentes, avec lequel la détermination du vecteur de nucléide global s'effectue en se référant à des chaînes de désintégration.

4. Procédé selon la revendication 3, avec lequel la détermination du vecteur de nucléide s'effectue en se référant à des chaînes de désintégration de produits de fission et/ou de produits d'activation.

5. Procédé selon les revendications 3 ou 4, avec lequel la prise en compte des chaînes de désintégration s'effectue en se référant à l'historique de fonctionnement de l'installation nucléaire.

6. Procédé selon l'une des revendications précédentes, avec lequel le vecteur de nucléide global est déterminé en calculant les proportions des intégrales de l'équation de désintégration des radionucléides respectifs en fonction de leur part respective aux valeurs mesurées d'un échantillon, en particulier du concentré d'évaporateur.

7. Procédé selon l'une des revendications précédentes, avec lequel, pour les résidus qui proviennent de zones pouvant être prédéfinies de l'installation nucléaire, en particulier de zones d'activation et de zones ayant un historique d'exploitation différent, la détermination du vecteur de nucléide global s'effectue en se référant aux valeurs mesurées spécifiques à un nucléide, mesurées sur les résidus issus des zones pouvant être prédéfinies.

8. Procédé selon l'une des revendications précédentes, avec lequel la quantité de résidus est acheminée à un premier dispositif de réception pour des marchandises à stocker séparément lorsque l'activité radiologique spécifique aux résidus dépasse une valeur limite pouvant être prédéfinie.

9. Procédé selon l'une des revendications précédentes, avec lequel la quantité de résidus est acheminée à un deuxième dispositif de réception pour des marchandises non contaminées lorsque l'activité radiologique spécifique aux résidus reste inférieure à une valeur limite pouvant être prédéfinie.

10. Procédé selon l'une des revendications précédentes, avec lequel la nouvelle détermination du vecteur de nucléide global comprend la mesure spécifique au nucléide de l'activité radiologique pour au moins une partie des radionucléides du vecteur de nucléide.
